# EUROPEAN PATENT SPECIFICATION

(11) **EP 3 978 999 B1**
(45) Date of publication and mention of the grant of the patent: **18.11.2026**
(21) Application number: 20814116.8
(22) Date of filing: 26.05.2020
(51) Int. Cl.: G03B 17/55, H04N 23/57, H04N 23/52, G03B 30/00, G03B 17/02

(54) **CAMERA MODULE**
KAMERAMODUL
MODULE DE CAMÉRA

(30) Priority: 31.05.2019 KR 20190064456; 31.05.2019 KR 20190064457
(43) Date of publication of application: 06.04.2022
(73) Proprietor: LG Innotek Co., Ltd., Seoul 07796 (KR)
(72) Inventor: HWANG, Sun Min, Seoul 07796 (KR); LEE, Min Woo, Seoul 07796 (KR)
(74) Representative: DREISS Patentanwälte PartG mbB
(86) International application number: PCT/KR2020/006805
(87) International publication number: WO 2020/242178

(56) References cited:
- EP-A1- 3 951 494
- JP-A- 2004 325 603
- KR-A- 20170 021 088
- KR-A- 20170 023 664
- KR-A- 20170 032 585
- KR-B1- 101 851 146
- US-A1- 2018 239 105
- US-A1- 2018 352 120
- US-A1- 2019 137 723
- US-A1- 2019 137 850

## Description

### [Technical Field]

The present embodiment relates to a camera module.

### [Background Art]

US 2018/352120 A1 discloses a camera module according to the preamble of claim 1.

Earlier patent document EP 3 951 494 A1 relates to a heating device and a camera module. The heating devise comprises: a substrate; a connection terminal electrically connected to the substrate; and a heating member electrically connected to the connection terminal. The connection terminal includes a first region including an inner portion and an outer portion, a third region electrically connected to the substrate, and a second region disposed between the first region and the third region. The heating member is disposed between the inner portion and the outer portion of the connection terminal.

US 2019/137850 A1 discloses a camera module, which includes an upper housing coupled to a lower housing to form an inner space, a lens module provided in the inner space and including a heating element. A substrate is configured to supply power to the heating element.

US 2018/239105 A1 relates to a camera module, and comprises a heating layer positioned on a lens so as to generate heat when power is supplied thereto. A heating wire is positioned on the surface of the lens or of the heating layer, which generates heat when a current is supplied thereto from an external power supply, and which is electrically connected to the heating layer.

US 2019/137723 A1 refers to a camera lens heater.

In recent years, micro-camera modules have been developed, and micro-camera modules are widely used in small electronic products such as smart phones, notebook computers, and game consoles.

As automobiles become more popular among public, micro-cameras are widely used not only in small electronic products but also in vehicles. For example, a black box camera for the protection of a vehicle or objective data of a traffic accident, a rear surveillance camera that enables the driver to monitor the blind spot at the rear of the vehicle through the screen to ensure safety when the vehicle is reversing, a surrounding detection camera that can monitor the surroundings of the vehicle, and the like are provided.

The camera may include a lens, a lens holder accommodating the lens, an image sensor for converting an image of a subject collected in the lens into an electrical signal, and a printed circuit board on which the image sensor is mounted. The housing constituting the outer shape of the camera has a structure in which the entire region is sealed in order to prevent contamination of internal parts from foreign substances including moisture.

Due to the characteristics of a vehicle that is disposed outdoors, the temperature inside and outside the vehicle forms a variety of distributions depending on the time. For example, in summer, the indoor temperature may be higher than the outdoor temperature, and in winter, the temperature may drop to below zero. Accordingly, condensation including frost may occur in the components including the lens and glass of the camera according to an abrupt temperature change. For this reason, satisfactory image recordings may not be obtained, or may cause a product failure.

### [Detailed Description of the Invention]

### [Technical Subject]

An object to be solved by the present invention is to provide a camera module capable of preventing condensation including frost from occurring on a lens.

### [Technical Solution]

The invention is as defined in claim 1.

In addition, the partition wall may be overlapped with the edge region of an upper surface of the substrate in the optical axis direction.

In addition, the edge region of the upper surface of the substrate may be in contact with a lower surface of the partition wall, and an upper surface of the substrate may be sealed from the outside by the partition wall.

In addition, the transmission member may include a first region connected to the heating member, a second region connected to the connector, and a third region connecting the first region and the second region.

In addition, at least a portion of the third region of the transmission member may be bent.

In addition, a retainer coupled to an upper portion of the accommodation unit to fix the outermost lens may be included.

In addition, an O-ring arranged between the outermost lens and the retainer may be included.

### [Advantageous Effects]

Through the present embodiment, it is possible to provide a camera module capable of preventing condensation including frost from occurring on the lens.

### [Brief Description of Drawings]

FIG. 1 is a perspective view of a camera module according to a first embodiment, which is not according to the invention and is present for illustration purposes only.
FIG. 2 is an exploded perspective view of a camera module according to a first embodiment, which is not according to the invention and is present for illustration purposes only.
FIG. 3 is a cross-sectional view of a camera module according to a first embodiment, which is not according to the invention and is present for illustration purposes only.
FIGS. 4 to 6 are perspective views of a housing according to a first embodiment, which is not according to the invention and is present for illustration purposes only.
FIG. 7 is a bottom view of the housing according to a first embodiment, which is not according to the invention and is present for illustration purposes only.
FIG. 8 is a perspective view of a heating member and a transmission member according to a first embodiment, which is not according to the invention and is present for illustration purposes only.
FIG. 9 is a perspective view of a substrate and an image sensor according to a first embodiment, which is not according to the invention and is present for illustration purposes only.
FIG. 10 is a perspective view of a camera module according to a second embodiment, which is configured according to the present invention.
FIG. 11 is an exploded perspective view of a camera module according to a second embodiment of the present invention.
FIG. 12 is a cross-sectional view of a camera module according to a second embodiment of the present invention.
FIG. 13 is an enlarged view of part A of FIG. 12.
FIG. 14 is a bottom view of a housing according to a second embodiment of the present invention.
FIG. 15 is a perspective view of a heating member and a transmission member according to a second embodiment of the present invention.
FIG. 16 is a perspective view of a substrate and an image sensor according to a second embodiment of the present invention.

### [BEST MODE]

Hereinafter, preferred embodiments of the present invention will be described in detail with reference to the accompanying drawings.

In addition, the terms (including technical and scientific terms) used in the embodiments of the present invention, unless explicitly defined and described, can be interpreted as a meaning that can be generally understood by a person skilled in the art, and commonly used terms such as terms defined in the dictionary may be interpreted in consideration of the meaning of the context of the related technology.

In addition, terms used in the present specification are for describing embodiments and are not intended to limit the present invention.

In the present specification, the singular form may include the plural form unless specifically stated in the phrase, and when described as "at least one (or more than one) of A and B and C", it may include one or more of all combinations that can be combined with A, B, and C.

In addition, in describing the components of the embodiment of the present invention, terms such as first, second, A, B, (a), and (b) may be used. These terms are merely intended to distinguish the components from other components, and the terms do not limit the nature, order or sequence of the components.

And, when a component is described as being 'connected', 'coupled' or 'interconnected' to another component, the component is not only directly connected, coupled or interconnected to the other component, but may also include cases of being 'connected', 'coupled', or 'interconnected' due that another component between that other components.

In addition, when described as being formed or arranged in "on (above)" or "below (under)" of each component, "on (above)" or "below (under)" means that it includes not only the case where the two components are directly in contact with, but also the case where one or more other components are formed or arranged between the two components. In addition, when expressed as "on (above)" or "below (under)", the meaning of not only an upward direction but also a downward direction based on one component may be included.

An 'optical axis direction' used below is defined as an optical axis direction of a lens module. Meanwhile, the 'optical axis direction' may correspond to an 'up-down direction', a 'z-axis direction', and the like.

Hereinafter, the present invention will be described in more detail with reference to the accompanying drawings.

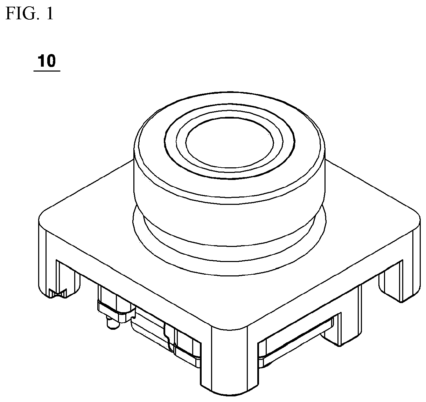

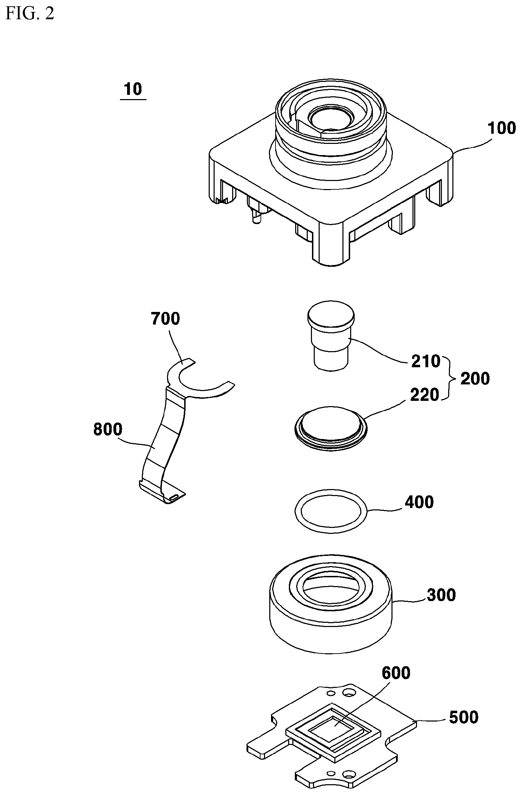

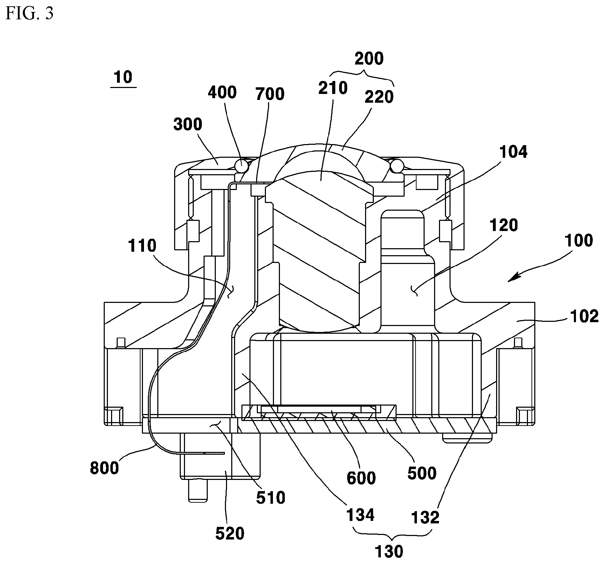

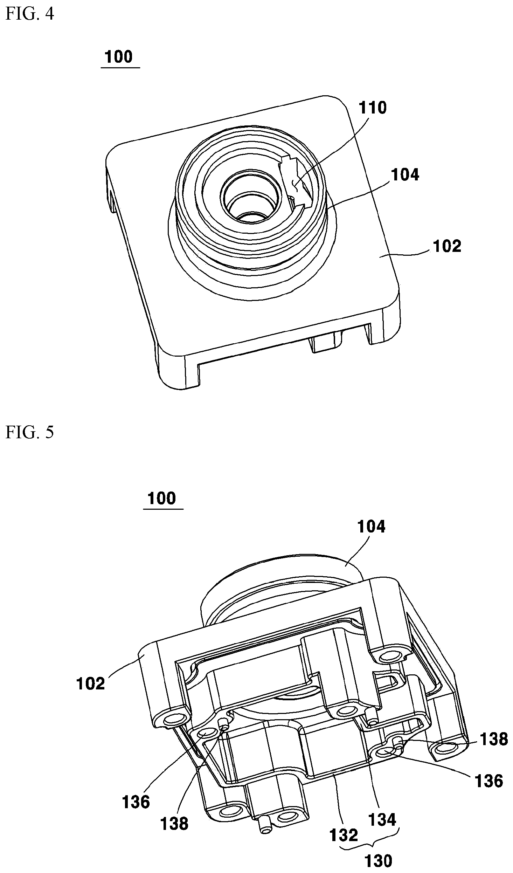

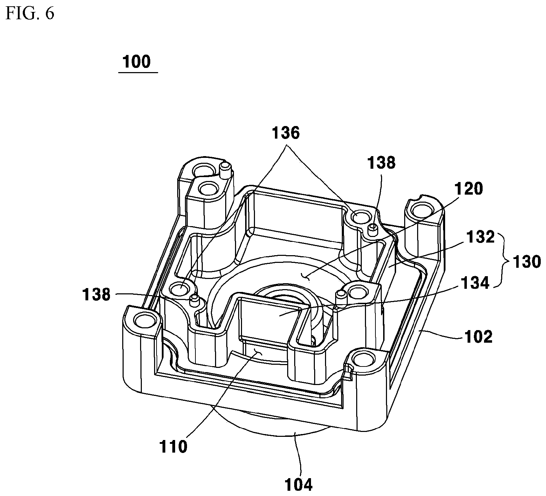

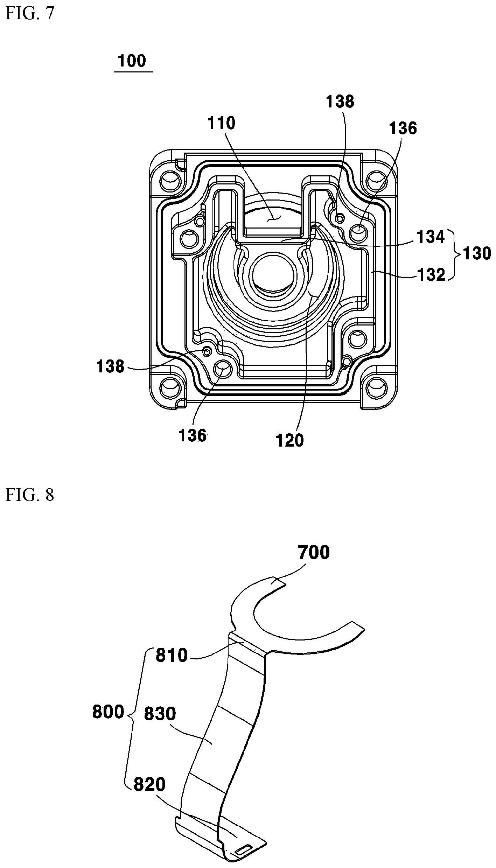

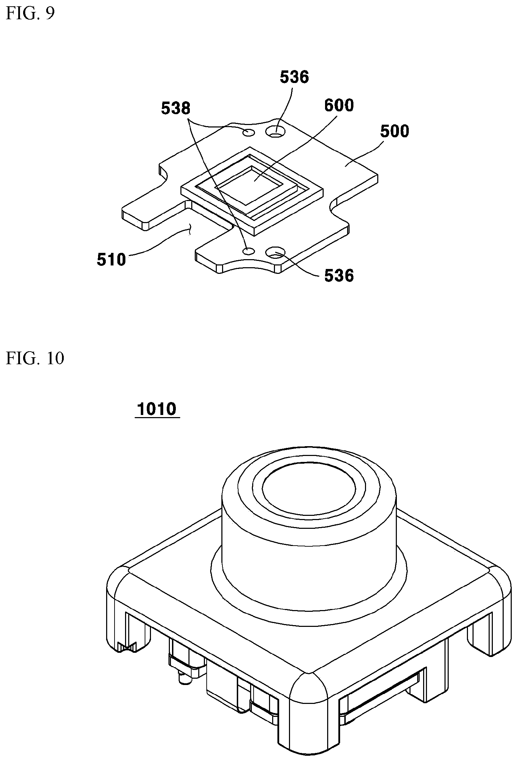

FIG. 1 is a perspective view of a camera module according to a first embodiment, which is not according to the invention and is present for illustration purposes only. FIG. 2 is an exploded perspective view of a camera module according to the first embodiment. FIG. 3 is a cross-sectional view of a camera module according to the first embodiment. FIGS. 4 to 6 are perspective views of a housing according to the first embodiment. FIG. 7 is a bottom view of the housing according to the first embodiment. FIG. 8 is a perspective view of a heating member and a transmission member according to the first embodiment. FIG. 9 is a perspective view of a substrate and an image sensor according to the first embodiment.

Referring to FIGS. 1 to 9, the camera module **10** according to the first embodiment may include a housing **100**, a lens module **200**, a retainer **300**, an O-ring **400,** a substrate **500,** an image sensor **600,** a heating member **700,** and a transmission member **800,** but may be implemented except for some of these configurations and does not exclude additional configurations other than that.

The camera module **10** according to the first embodiment may include a housing **100.** The housing **100** may form the outer appearance of the camera module **10.** In the housing **100,** a lens module **200,** a retainer **300,** an O-ring **400,** a substrate **500,** an image sensor **600,** a heating member **700,** and a transmission member **800** may be arranged. The housing **100** may be combined with an additional housing (not shown) arranged on a lower part. The housing **100** may be arranged below the retainer **300.** The housing **100** may include a body **102,** an accommodation unit **104,** and a partition wall **130.**

The housing **100** may include a body **102.** The body **102** may form the outer appearance of the camera module **10.** The body **102** may be formed in a hexahedral shape with an open lower surface. An accommodation unit **104** may be formed in the body **102.** An accommodation unit **104** may be formed in the central region of the body **102.** The body **102** may be integrally formed with the accommodation unit **104.** The body **102** may be combined with an additional housing being arranged on a lower part. The body **102** may be formed with a first partition wall **132** on the lower part.

The housing **100** may include an accommodation unit **104.** The accommodation unit **104** may be formed being extended from the body **102.** The accommodation unit **104** may be formed in the central region of the body **102.** The accommodation unit **104** may be extended in the optical axis direction. The accommodation unit **104** may be formed integrally with the body **102.** The accommodation unit **104** may be formed in a cylindrical shape. The accommodation unit **104** may include an opening, a hole **110,** and a second groove **120.** A second partition wall **134** may be formed in the lower part of the accommodation unit **104.**

The accommodation unit **104** may include an opening. An opening being extended in the optical axis direction may be formed in the central region of the accommodation unit **104.** The lens module **200** may be arranged in the accommodation unit **104.** The lens module **200** may be arranged in the opening of the accommodation unit **104.** At least one lens **210** may be arranged in the opening of the accommodation unit **104.** The at least one lens **210** is screw-coupled to the inner circumferential surface of the opening of the accommodation unit **104.** An outermost lens **220** may be arranged in the upper part region of the accommodation unit **104.** The upper part of the opening of the accommodation unit **104** may be sealed by the outermost lens **220.** The outermost lens **220** may be exposed to the upper part of the accommodation unit **104.**

The accommodation unit **104** may include a hole **110.** The hole **110** may be extended in the optical axis direction. The hole **110** may be spaced apart from the opening of the accommodation unit **104** in a direction perpendicular to the optical axis. The hole **110** may be located in some region based on the cross-section of the accommodation unit **104.** The hole **110** may be penetrated by the transmission member **800.** The hole **110** may be overlapped with at least one lens **210** in a direction perpendicular to the optical axis. The hole **110** may not be overlapped with the image sensor **600** arranged on the upper surface of the substrate **500** in the optical axis direction.

The accommodation unit **104** may include a second groove **120.** The second groove **120** may be formed on the lower surface of the accommodation unit **104.** The second groove **120** may be concave upwards on the lower surface of the accommodation unit **104.** The second groove **120** may be extended in the optical axis direction. The second groove **120** may be overlapped with at least one lens **210** in a direction perpendicular to the optical axis. The second groove **120** may be spaced apart from the hole **110.** The second groove **120** may be overlapped with the hole **110** in a direction perpendicular to the optical axis. Through this, it is possible to reduce the cost by reducing raw materials of the camera module **10** and reducing the weight.

The housing **100** may include a partition wall **130.** The partition wall **130** may be formed in the lower part of the housing **100.** The partition wall **130** may be protruded downward from the lower surface of the housing **100.** The partition wall **130** may be coupled to the upper surface of the substrate **500.** The lower surface of the partition wall **130** may be coupled to the upper surface of the substrate **500.** The partition wall **130** may be overlapped with the edge region of the substrate **500** in the optical axis direction. The lower surface of the partition wall **130** may be in contact with the edge region of the substrate **500.** The lower surface of the partition wall **130** may be formed in a shape corresponding to the edge region of the substrate **500.** The partition wall **130** may seal the upper surface of the substrate **500** from the outside. Through this, it is possible to prevent foreign substances from penetrating into the image sensor **600** or other elements. The partition wall **130** may include a first partition wall **132,** a second partition wall **134,** a first coupling hole **136,** and a boss **138.**

The partition wall **130** may include a first partition wall **132.** The first partition wall **132** may be formed in the lower part of the body **102.** The first partition wall **132** may be protruded downward from the lower surface of the body **102.** The first partition wall **132** may be coupled to the upper surface of the substrate **500.** The first partition wall **132** may be connected to the second partition wall **134.** The first partition wall **132** may be integrally formed with the second partition wall **134.** The first partition wall **132** may be in contact with the edge region of the upper surface of the substrate **500.**

The partition wall **130** may include a second partition wall **134.** The second partition wall **134** may be formed in the lower part of the accommodation unit **104.** The second partition wall **134** may be protruded downward from the lower surface of the accommodation unit **104.** The second partition wall **134** may be coupled to the upper surface of the substrate **500.** The second partition wall **134** may be connected to the first partition wall **132.** The second partition wall **134** may be integrally formed with the first partition wall **132.** The second partition wall **134** may be in contact with a region adjacent to the first groove **510** among edge regions of the upper surface of the substrate **500.**

The partition wall **130** may include a first coupling hole **136.** The first coupling hole **136** may be formed on the lower surface of the partition wall **130.** The first coupling hole **136** may be overlapped with the second coupling hole **536** formed in the substrate **500** in the optical axis direction. The first coupling hole **136** may be formed in a shape corresponding to the second coupling hole **536** formed in the substrate **500.** The first coupling hole **136** is penetrated through by a coupling member, for example, a screw, together with the second coupling hole **536** formed in the substrate **500.** Through this, the lower surface of the partition wall **130** may be coupled to the upper surface of the substrate **500.** The first coupling hole **136** may include two first coupling holes **136.** The two first coupling holes **136** may be formed at positions symmetrical to each other with respect to the optical axis. Through this, coupling stability between the lower surface of the partition wall **130** and the upper surface of the substrate **500** may be enhanced.

The partition wall **130** may include a boss **138.** The boss **138** may be formed on the lower surface of the partition wall **130.** The boss **138** may be overlapped with the through hole **538** formed in the substrate **500** in the optical axis direction. The boss **138** may be formed in a shape corresponding to the through hole **538** formed in the substrate **500.** The boss **138** may be inserted into the through hole **538** formed in the substrate **500.** Through this, it is possible to guide the positioning of the housing **100** and the substrate **500** with respect to each other. The boss **138** may include two bosses **138.** The two bosses **138** may be formed at positions symmetrical to each other with respect to the optical axis. Through this, the positioning force of the housing **100** and the substrate **500** with respect to each other may be enhanced.

The camera module **10** according to the first embodiment may include a lens module **200.** The lens module **200** may be arranged in the housing **100.** The lens module **200** may be arranged in the accommodation unit **104** of the housing **100.** The lens module **200** may be arranged in an opening of the accommodation unit **104** of the housing **100.** The lens module **200** may include at least one lens **210** and an outermost lens **220.**

The lens module **200** may include at least one lens **210.** The at least one lens **210** may be arranged in the accommodation unit **104.** The at least one lens **210** may be screw-coupled to the inner circumferential surface of the accommodation unit **104.** The at least one lens **210** may be arranged on one side or below the outermost lens **220.** The at least one lens **210** may be overlapped with the hole **110** of the accommodation unit **104** in a direction perpendicular to the optical axis. The at least one lens **210** may be overlapped with the second groove **120** of the accommodation unit **104** in a direction perpendicular to the optical axis. Each lens of the at least one lens **210** may be made of a synthetic resin material, a glass material, or a quartz material, but is not limited thereto and may be made of various materials.

The lens module **200** may include an outermost lens **220.** The outermost lens **220** may be arranged on the upper part of the accommodation unit **104.** The outermost lens **220** may seal the opening of the accommodation unit **104.** The outermost lens **220** may be fixed to the accommodation unit **104** by the retainer **300.** The outermost lens **220** may be made of a synthetic resin material, a glass material, or a quartz material, but is not limited thereto and may be made of various materials.

The camera module **10** according to the first embodiment may include a retainer **300.** The retainer **300** may be coupled to the housing **100.** The retainer **300** may be coupled to the upper part of the accommodation unit **104** of the housing **100.** The retainer **300** may secure the outermost lens **220.** After the outermost lens **220** and the at least one lens **210** are inserted from the upper part of the accommodation unit **104** and assembled in the accommodation unit **104,** the retainer **300** is coupled to the upper part of the accommodation unit **104** to fix the outermost lens **220** to the accommodation unit **104.** At this time, one end of the retainer **300** is formed in a letter ' 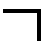 ' shape, so that the outermost lens **220** accommodated in the accommodation unit **104** can be fixed by pressing it downward. The other end of the retainer **300** may be snap-fit or screw-coupled to the outer circumferential surface of the accommodation unit **104.** The other end of the retainer **300** may be coupled to the accommodation unit **104** through an adhesive member such as epoxy.

The camera module **10** according to the first embodiment may include an O-ring **400.** The O-ring **400** may be arranged between the lens module **200** and the retainer **300.** The O-ring **400** may be arranged between the outermost lens **220** and the retainer **300.** The O-ring **400** may be formed of a material having elasticity. The O-ring **400** may be formed in a ring shape. Through this, it is possible to prevent damage to components that may occur when the retainer **300** presses the outermost lens **220** of the lens module **200** downward.

The camera module **10** according to the first embodiment may include a substrate **500.** The substrate **500** may be arranged in the housing **100.** The substrate **500** may be arranged on the lower part of the housing **100.** The substrate **500** may be coupled to the lower part of the housing **100.** The substrate **500** may be coupled to the lower surface of the partition wall **130** of the housing **100.** The edge region of the upper surface of the substrate **500** may be overlapped with the partition wall **130** in the optical axis direction. The edge region of the upper surface of the substrate **500** may be in contact with the lower surface of the partition wall **130.** The upper surface of the substrate **500** may be sealed from the outside by the partition wall **130.** Through this, it is possible to prevent foreign substances from penetrating into the image sensor **600** or other elements arranged on the upper surface of the substrate **500.**

The substrate **500** may be electrically connected to an image sensor **600.** The image sensor **600** may be arranged on the substrate **500.** The image sensor **600** may be arranged on the upper surface of the substrate **500.** The image sensor **600** may be mounted on the upper surface of the substrate **500.** The substrate **500** may be electrically connected to the transmission member **800.** The substrate **500** may be electrically connected to a connector **520.** The connector **520** may be arranged on the lower surface of the substrate **500.** The connector **520** may be mounted on the lower surface of the substrate **500.** The substrate **500** may be electrically connected to the transmission member **800** through the connector **520.**

The substrate **500** may include a printed circuit board (PCB). The substrate **500** may include a flexible printed circuit board (FPCB).

The substrate **500** may include a first groove **510.** The first groove **510** may be formed on a side surface of the substrate **500.** The first groove **510** may be concavely formed on the side surface of the substrate **500.** The first groove **510** may be spaced apart from the image sensor **600.** The first groove **510** may be penetrated by the transmission member **800.** A cross-section of the first groove **510** may be formed in a rectangular shape. At least a portion of the first groove **510** may be overlapped with the hole **110** of the housing **100** in the optical axis direction. The first groove **510** may be located outside the partition wall **130.** Specifically, the first groove **510** may be located outside the second partition wall **134.**

The substrate **500** may include a second coupling hole **536.** The second coupling hole **536** may be formed through the substrate **500.** The second coupling hole **536** may be overlapped with the first coupling hole **136** formed in the partition wall **130** in the optical axis direction. The second coupling hole **536** may be formed in a shape corresponding to the first coupling hole **136** formed in the partition wall **130.** The second coupling hole **536** may be penetrated through by a coupling member, for example, a screw, together with the first coupling hole **136** formed in the partition wall **130.** Through this, the upper surface of the substrate **500** may be coupled to the lower surface of the partition wall **130.** The second coupling hole **536** may include two second coupling holes **536.** The two second coupling holes **536** may be formed at positions symmetrical to each other with respect to the optical axis. Through this, bonding stability between the upper surface of the substrate **500** and the lower surface of the partition wall **130** may be enhanced.

The substrate **500** may include a through hole **538.** The through hole **538** may be formed by penetrating through the substrate 500. The through hole **538** may be overlapped with the boss **138** formed in the partition wall **130** in the optical axis direction. The through hole **538** may be formed in a shape corresponding to the boss **138** formed in the partition wall **130.** The through hole **538** may be penetrated by the boss **138** formed in the partition wall **130.** Through this, it is possible to guide the positioning of the housing **100** and the substrate **500** with respect to each other. The through hole **538** may include two through holes **538.** The two through-holes **538** may be formed at positions symmetrical to each other with respect to the optical axis. Through this, the positioning force of the housing **100** and the substrate **500** with respect to each other may be enhanced.

A camera module **10** according to the first embodiment may include an image sensor **600.** The image sensor **600** may be arranged on the upper surface of the substrate **500.** The image sensor **600** may be mounted in a central region of the upper surface of the substrate **500.** The image sensor **600** may be arranged below the lens module **200.** The image sensor **600** may be spaced apart from the first groove **510.** The image sensor **600** may be electrically connected to the substrate **500.** For example, the image sensor **600** may be coupled to the substrate **500** by a surface mounting technology (SMT). As another example, the image sensor **600** may be coupled to the substrate **500** by a flip chip technology.

The camera module **10** according to the first embodiment may include a heating member **700.** The heating member **700** may be arranged in the lens module **200.** The heating member **700** may be arranged on one side of the outermost lens **220.** The heating member **700** may be arranged on the lower surface of the outermost lens **220.** The heating member **700** may be formed of a transparent material. The heating member **700** may be formed in a shape that does not interfere with light passing through the lens module **200.** For example, the heating member **700** may be formed in a C-shape.

The heating member **700** may be electrically connected to the transmission member **800.** The heating member **700** may receive power from the substrate **500** through the transmission member **700** to generate heat. The heating member **700** may be a transparent heating film coated with indium thin oxide (ITO) having conductivity capable of generating heat by a self-resistance component. The heating member **700** may be formed by, for example, a coating process or a deposition process of an indium tin oxide material. However, this is an example, and the material of the heating member **700** is not limited thereto, and may be variously changed as long as it is a material that can generate heat by supplying current.

The camera module **10** according to the first embodiment may include a transmission member **800.** The transmission member **800** may electrically connect the heating member **700** and the substrate **500.** The transmission member **800** may connect the heating member **700** and the connector **520.** The transmission member **800** may be electrically connected to the heating member **700.** The transmission member **800** may be electrically connected to the substrate **500** through a connector **520.** The transmission member **800** may supply current from the substrate **500** to the heating member **700.** At least a portion of the transmission member **800** may be bent. The transmission member **800** may sequentially pass through the hole **110** of the accommodation unit **104** and the first groove **510** of the substrate **500.** The transmission member **800** may be a flexible printed circuit board (FPCB).

The transmission member **800** may include a first region **810** connected to the heating member **700,** a second region **820** connected to the connector **520,** and a third region **830** connecting the first region **810** to the second region **820.** At least a portion of the third region **830** may be bent. The third region **830** may sequentially pass through the hole **110** of the accommodation unit **104** and the first groove **510** of the substrate **500.** Through this, space efficiency can be enhanced.

According to a camera module **10** according to the first embodiment, it is possible to prevent the occurrence of condensation including frost on the outermost lens **220** through the heating member **700.**

In addition, according to a camera module **10** according to the first embodiment, it is possible to prevent a foreign material from penetrating into the image sensor **600** through the partition wall **130,** and the space efficiency can be enhanced.

Hereinafter, a second embodiment of the present invention will be described in more detail with reference to the accompanying drawings.

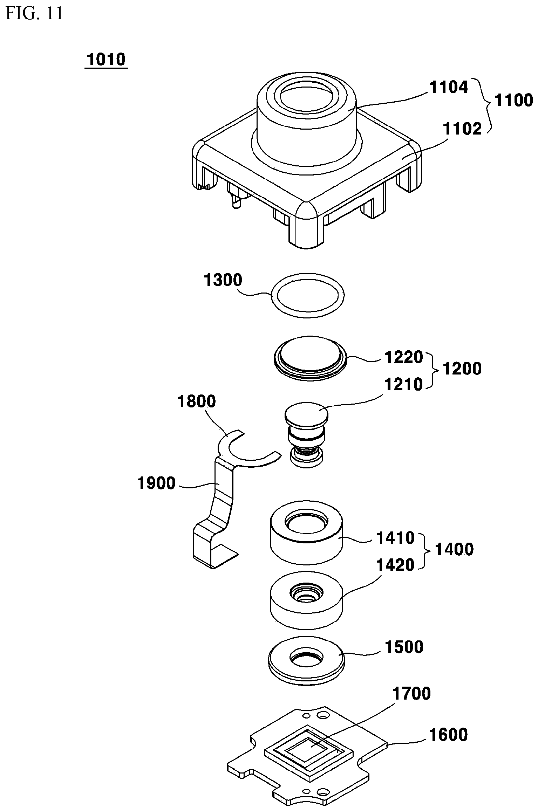

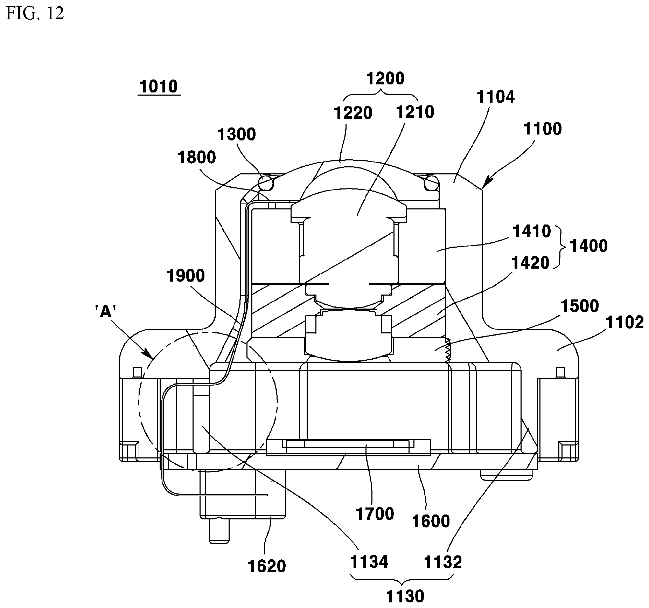

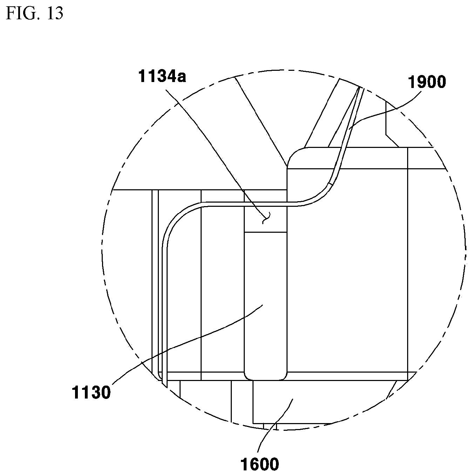

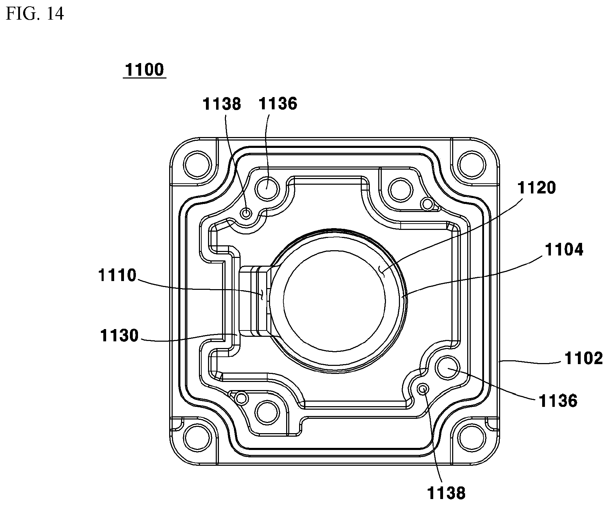

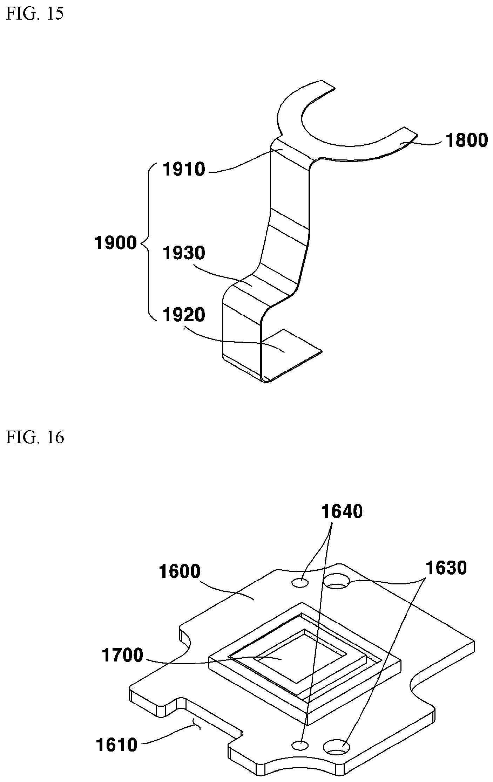

FIG. 10 is a perspective view of a camera module according to a second embodiment of the present invention. FIG. 11 is an exploded perspective view of a camera module according to a second embodiment of the present invention. FIG. 12 is a cross-sectional view of a camera module according to a second embodiment of the present invention. FIG. 13 is an enlarged view of part A of FIG. 12. FIG. 14 is a bottom view of a housing according to a second embodiment of the present invention. FIG. 15 is a perspective view of a heating member and a transmission member according to a second embodiment of the present invention. FIG. 16 is a perspective view of a substrate and an image sensor according to a second embodiment of the present invention.

Referring to FIGS. 10 to 16, the camera module **1010** according to the second embodiment of the present invention includes a housing **1100,** a lens module **1200,** an O-ring **1300,** a spacer **1400,** fixing members **1500,** a substrate **1600,** an image sensor **1700,** a heating member **1800,** and a transmission member **1900.**

The camera module **1010** according to the second embodiment of the present invention includes a housing **1100.** The housing **1100** forms the outer appearance of the camera module **1010.** In the housing **1100,** a lens module **1200,** an O-ring **1300,** a spacer **1400,** fixing member **1500,** a substrate **1600,** an image sensor **1700,** a heating member **1800,** and a transmission member **1900** are arranged. The housing **1100** may be coupled with an additional housing (not shown) arranged on the lower part. The housing **1100** may include a body **1102,** an accommodation unit **1104,** and a partition wall **1130.**

The housing **1100** includes a body **1102.** The body **1102** forms the outer appearance of the camera module **1010.** The body **1102** may be formed in a hexahedral shape with an open lower surface. An accommodation unit **1104** is formed in the body **1102.** The accommodation unit **1104** may be formed in the central region of the body **1102.** The body **1102** may be integrally formed with the accommodation unit **1104.** The body **1102** may be coupled with an additional housing that is arranged on the lower part. In the lower part of the body **1102,** a first partition wall **1132** and a second partition wall **1134** may be formed.

The housing **1100** includes an accommodation unit **1104.** The accommodation unit **1104** is formed by being extended from the body **1102.** The accommodation unit **1104** is formed in the central region of the body **1102.** The accommodation unit **1104** is extended in the optical axis direction. The accommodation unit **1104** may be formed integrally with the body **1102.** The accommodation unit **1104** may be formed in a cylindrical shape. The upper surface of the outermost lens **1220** may be arranged on the inner side surface of the accommodation unit **1104.** The upper end of the accommodation unit **1104** is formed in a letter ' 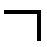 ' shape to prevent the outermost lens **1220** from being released to the outside. The spacer **1400** is arranged between the accommodation unit **1104** and at least one lens **1210.** A separation space formed in a portion of the space between the accommodation unit **1104** and the spacer **1400** is penetrated by the transmission member **1900.**

A step portion may be formed on the inner side surface of the accommodation unit **1104.** The upper surface of the spacer **1400** may be seated on a step portion formed on the inner side surface of the accommodation unit **1104.** The edge region of the upper surface of the spacer **1400** may be seated on the step portion formed on the inner side surface of the accommodation unit **1104.** Through this, it is possible to secure a space in which the outermost lens **1220** is arranged.

The accommodation unit **1104** may include an opening **1120.** The opening **1120** being extended in the optical axis direction may be formed in the central region of the accommodation unit **1104.** A lens module **1200** may be arranged in the accommodation unit **1104.** The lens module **1200** may be arranged in the opening **1120** of the accommodation unit **1104.** At least one lens **1210** is arranged in the opening **1120** of the accommodation unit **1104.** An outermost lens **1220** may be arranged in the upper part region of the opening **1120** of the accommodation unit **1104.** The radius of the opening **1120** of the accommodation unit **1104** may be larger than the radius of the at least one lens **1210.** The spacer **1400** may be arranged in the opening **1120** of the accommodation unit **1104.** In some regions of the opening **1120** of the accommodation unit **1104,** some regions of the transmission member **1900** may be arranged.

The housing **1100** includes a partition wall **1130.** The partition wall **1130** is formed in the lower part of the housing **1100.** The partition wall **1130** is protruded downward from the lower surface of the housing **1100.** The partition wall **1130** is coupled to the upper surface of the substrate **1600.** The lower surface of the partition wall **1130** is coupled to the upper surface of the substrate **1600.** The partition wall **1130** may be overlapped with the edge region of the substrate **1600** in the optical axis direction. The lower surface of the partition wall **1130** is in contact with the edge region of the substrate **1600.** The lower surface of the partition wall **1130** may be formed in a shape corresponding to the edge region of the substrate **1600.** The partition wall **1130** may seal the upper surface of the substrate **1600** from the outside. Through this, it is possible to prevent foreign substances from penetrating into the image sensor **1700** or other elements. The partition wall **1130** may include a first partition wall **1132,** a second partition wall **1134,** a first coupling hole **1136,** and a boss **1138.**

The partition wall **1130** may include a first partition wall **1132.** The first partition wall **1132** may be formed in the lower part of the body **1102.** The first partition wall **1132** may be protruded downward from the lower surface of the body **1102.** The first partition wall **1132** may be coupled to the upper surface of the substrate **1600.** The first partition wall **1132** may be connected to the second partition wall **1134.** The first partition wall **1132** may be integrally formed with the second partition wall **1134.** The first partition wall **1132** may be in contact with the edge region of the upper surface of the substrate **1600.** The first partition wall **1132** may be further spaced apart from the optical axis than the second partition wall **1134.**

The partition wall **1130** may include a second partition wall **1134.** The second partition wall **1134** may be formed in the lower part of the body **1102.** The second partition wall **1134** may be protruded downward from the lower surface of the body **1102.** The second partition wall **1134** may be coupled to the upper surface of the substrate **1600.** The second partition wall **1134** may be connected to the first partition wall **1132.** The second partition wall **1134** may be integrally formed with the first partition wall **1132.** The second partition wall **1134** may be in contact with a region adjacent to the first groove **1610** among the edge region of the upper surface of the substrate **1600.** The second partition wall **1134** may be arranged at a position closer to the optical axis than the first partition wall **1132.**

The second partition wall **1134** includes a hole **1134a.** The hole **1134a** is formed in the upper part region of the second partition wall **1134.** The hole **1134a** is penetrated by the transmission member **1900.** After some regions of the transmission member **1900** are arranged, the hole **1134a** may be sealed by a sealing member (not shown). At this time, the sealing member may include a thermosetting resin such as epoxy. Through this, it is possible to prevent foreign substances from being introduced into the image sensor **1700.**

The partition wall **1130** may include a first coupling hole **1136.** The first coupling hole **1136** may be formed on the lower surface of the partition wall **1130.** The first coupling hole **1136** may be overlapped with the second coupling hole **1630** formed in the substrate **1600** in the optical axis direction. The first coupling hole **1136** may be formed in a shape corresponding to the second coupling hole **1630** formed in the substrate **1600.** The first coupling hole **1136** is penetrated through by a coupling member, for example, a screw, together with the second coupling hole **1630** formed in the substrate **1600.** Through this, the lower surface of the partition wall **1130** is coupled to the upper surface of the substrate **1600.** The first coupling hole **1136** may include two first coupling holes **1136.** The two first coupling holes **1136** may be formed at positions symmetrical to each other with respect to the optical axis. Through this, bonding stability between the lower surface of the partition wall **1130** and the upper surface of the substrate **1600** may be enhanced.

The partition wall **1130** may include a boss **1138.** The boss **1138** may be formed on the lower surface of the partition wall **1130.** The boss **1138** may be overlapped with the through hole **1640** formed in the substrate **1600** in the optical axis direction. The boss **1138** may be formed in a shape corresponding to the through hole **1640** formed in the substrate **1600.** The boss **1138** may be inserted into the through hole **1640** formed in the substrate **1600.** Through this, it is possible to guide the positioning of the housing **1100** and the substrate **1600** with respect to each other. Boss **1138** may include two bosses **1138.** The two bosses **1138** may be formed at positions symmetrical to each other with respect to the optical axis. Through this, the positioning force of the housing **1100** and the substrate **1600** with respect to each other may be enhanced.

The camera module **1010** according to the second embodiment of the present invention may include a lens module **1200.** The lens module **1200** may be arranged in the housing **1100.** The lens module **1200** may be arranged in the accommodation unit **1104** of the housing **1100.** The lens module **1200** may be arranged in the opening **1120** of the accommodation unit **1104** of the housing **1100.** The lens module **1200** includes at least one lens **1210** and an outermost lens **1220.**

The lens module **1200** includes at least one lens **1210.** The at least one lens **1210** is arranged in the accommodation unit **1104.** The radius of the at least one lens **1210** is smaller than the radius of the opening **1120** of the accommodation unit **1104.** The at least one lens **1210** is arranged on one side or below the outermost lens **1220.** The at least one lens **1210** may be overlapped with the spacer **1400** in a direction perpendicular to the optical axis. The at least one lens **1210** may be supported by the spacer **1400.** The at least one lens **1210** may be fixed and supported by the fixing member **1500.** The at least one lens **1210** may include a plurality of lenses having a step difference from each other. A plurality of lenses having a step difference may be respectively supported by a plurality of spacers **1410** and **420.** Each lens of the at least one lens **1210** may be made of a synthetic resin material, a glass material, or a quartz material, but is not limited thereto and may be made of various materials.

The lens module **1200** includes an outermost lens **1220.** The outermost lens **1220** is arranged in the upper part of the accommodation unit **1104.** The outermost lens **1220** may seal the opening **1120** of the accommodation unit **1104.** At least a portion of the upper surface of the outermost lens **1220** is in contact with the upper part region of the inner side surface of the accommodation unit **1104.** At least a portion of the lower surface of the outermost lens **1220** is in contact with the upper surface of the at least one lens **1210.** A radius of the outermost lens **1220** may be larger than a radius of the at least one lens **1210.** The outermost lens **1220** is fixed to the accommodation unit **1104** by an upper end of the accommodation unit **1104** and at least one lens **1102.** The outermost lens **1220** may be made of a synthetic resin material, a glass material, or a quartz material, but is not limited thereto and may be made of various materials.

The camera module **1010** according to the second embodiment of the present invention may include an O-ring **1300.** The O-ring **1300** may be arranged between the housing **1100** and the lens module **1200.** The O-ring **1300** may be arranged between the outermost lens **1220** and the accommodation unit **1104** of the housing **1100.** The O-ring **1300** may be formed of a material having elasticity. The O-ring **1300** may be formed in a ring shape. Through this, it is possible to prevent damage to components that may occur when an upper end of the accommodation unit **1104** of the housing **1100** presses the outermost lens **1220** of the lens module **1200** downward. In addition, the O-ring **1300** may have a waterproof function that prevents moisture from entering the camera module **1010** through the accommodation unit **1104.**

The camera module **1010** according to the second embodiment of the present invention may include a spacer **1400.** The spacer **1400** may be arranged in the housing **1100.** The spacer **1400** may be arranged in the accommodation unit **1104** of the housing **1100.** The spacer **1400** may be arranged in the opening **1120** of the accommodation unit **1104** of the housing **1100.** The spacer **1400** may be arranged between the inner surface of the accommodation unit **1104** of the housing **1100** and the at least one lens **1210** to support the at least one lens **1210.** The spacer **1400** may be arranged between the inner surface of the accommodation unit **1104** of the housing **1100** and the lens module **1200.**

The spacer **1400** may be formed of an aluminum material. Through this, heat loss of the heating member **1800** may be reduced, and thus the amount of heat flowing into the outermost lens **1210** may be enhanced.

A separation space **1110** may be formed on the inner surface of the spacer **1400** and the accommodation unit **1104** of the housing **1100.** The spacer **1400** and the separation space **1110** formed on the inner surface of the accommodation unit **1104** of the housing **1100** may be penetrated by the transmission member **1900.**

The spacer **1400** may include a plurality of spacers **1410** and **420.** When the at least one lens **1210** includes a plurality of lenses having a step difference from each other, the plurality of lenses may be supported through a plurality of spacers **1410** and **420,** respectively.

A camera module **1010** according to the second embodiment of the present invention may include a fixing member **1500.** The fixing member **1500** may be arranged in the housing **1100.** The fixing member **1500** may be arranged in the accommodation unit **1104** of the housing **1100.** The fixing member **1500** may be arranged between the inner surface of the accommodation unit **1104** of the housing **1100** and the at least one lens **1210.** The fixing member **1500** may be arranged on one side or the lower part of the spacer **1400.** The upper surface of the fixing member **1500** may be in contact with the lower surface of the spacer **1400.** The outer side surface of the fixing member **1500** may be coupled to the inner side surface of the accommodation unit **1104** of the housing **1100.** The outer side surface of the fixing member **1500** may be screw-coupled or tap-coupled to the inner side surface of the accommodation unit **1104** of the housing **1100.** In this case, a screw thread corresponding to a screw thread formed on the inner side surface of the accommodation unit **1104** of the housing **1100** may be formed on the outer side surface of the fixing member **1500.** Through this, the positions of the lens module **1200** and the spacer **1400** may be fixed.

The radius of the fixing member **1500** may be larger than the radius of the spacer **1400.** Through this, the spacer **1400** may be stably supported. The lower part region of the fixing member **1500** may support at least one lens **1210.** A lower end of the inner side surface of the fixing member **1500** may be formed in a letter ' 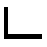 ' shape to support a lower end of the at least one lens **1210.** Through this, the at least one lens **1210** may be stably supported.

A separation space **1110** may be formed on the inner surface of the fixing member **1500** and the accommodation unit **1104** of the housing **1100.** The separation space **1110** formed on the inner surface of the fixing member **1500** and the accommodation unit **1104** of the housing **1100** is penetrated by the transmission member **1900.**

In the second embodiment of the present invention, the fixing member **1500** is arranged between at least one lens **1210** and the inner side surface of the accommodation unit **1104** as an example, but the fixing member **1500** may be arranged below the spacer **1400** and the at least one lens **1210.** In this case, the lower end of the spacer **1400** and the lower end of the at least one lens **1210** may be arranged on a same plane.

The camera module **1010** according to the second embodiment of the present invention includes a substrate **1600.** The substrate **1600** is arranged in the housing **1100.** The substrate **1600** is arranged on the lower part of the housing **1100.** The substrate **1600** is coupled to the lower part of the housing **1100.** The substrate **1600** is coupled to the lower surface of the partition wall **1130** of the housing **1100.** The edge region of the upper surface of the substrate **1600** may be overlapped with the partition wall **1130** in the optical axis direction. The edge region of the upper surface of the substrate **1600** is in contact with the lower surface of the partition wall **1130.** The upper surface of the substrate **1600** may be sealed from the outside by the partition wall **1130.** Through this, it is possible to prevent foreign substances from penetrating into the image sensor **1700** or other elements arranged on the upper surface of the substrate **1600.**

The substrate **1600** may be electrically connected to the image sensor **1700.** The image sensor **1700** may be arranged on the substrate **1600.** The image sensor **1700** may be arranged on the upper surface of the substrate **1600.** The image sensor **1700** may be mounted on the upper surface of the substrate **1600.** The substrate **1600** is electrically connected to the transmission member **1900.** The substrate **1600** may be electrically connected to a connector **1620.** The connector **1620** may be arranged on the lower surface of the substrate **1600.** The connector **1620** is mounted on the lower surface of the substrate **1600.** The substrate **1600** is electrically connected to the transmission member **1900** through the connector **1620.**

The substrate **1600** may include a printed circuit board (PCB). The substrate **1600** may include a flexible printed circuit board (FPCB).

The substrate **1600** includes a groove **1610.** The groove **1610** is formed on a side surface of the substrate **1600.** The groove **1610** may be concavely formed in the side surface of the substrate **1600.** The groove **1610** may be spaced apart from the image sensor **1700.** The groove **1610** is penetrated by the transmission member **1900.** The cross-section of the groove **1610** may be formed in a rectangular shape. The groove **1610** may not be overlapped with the accommodation unit **1104** of the housing **1100** in the optical axis direction. The groove **1610** may be located outside the partition wall **1130.** Specifically, the groove **1610** may be located outside the second partition wall **1134.**

The substrate **1600** may include a second coupling hole **1630.** The second coupling hole **1630** may be formed through the substrate **1600.** The second coupling hole **1630** may be overlapped with the first coupling hole **1136** formed in the partition wall **1130** in the optical axis direction. The second coupling hole **1630** may be formed in a shape corresponding to the first coupling hole **1136** formed in the partition wall **1130.** The second coupling hole **1630** may be penetrated through by a coupling member, for example, a screw, together with the first coupling hole **1136** formed in the partition wall **1130.** Through this, the upper surface of the substrate **1600** may be coupled to the lower surface of the partition wall **1130.** The second coupling hole **1630** may include two second coupling holes **1630.** The two second coupling holes **1630** may be formed at positions symmetrical to each other with respect to the optical axis. Through this, bonding stability between the upper surface of the substrate **1600** and the lower surface of the partition wall **1130** may be enhanced.

The substrate **1600** may include a through hole **1640.** The through hole **1640** may be formed through the substrate **1600.** The through hole **1640** may be overlapped with the boss **1138** formed in the partition wall **1130** in the optical axis direction. The through hole **1640** may be formed in a shape corresponding to the boss **1138** formed in the partition wall **1130.** The through hole **1640** may be penetrated by the boss **1138** formed in the partition wall **1130.** Through this, it is possible to guide the positioning of the housing **1100** and the substrate **1600** with respect to each other. The through hole **1640** may include two through holes **1640.** The two through holes **1640** may be formed at positions symmetrical to each other with respect to the optical axis. Through this, the positioning force of the housing **1100** and the substrate **1600** with respect to each other may be enhanced.

The camera module **1010** according to the second embodiment of the present invention includes an image sensor **1700.** The image sensor **1700** may be arranged on the upper surface of the substrate **1600.** The image sensor **1700** may be mounted in a central region of the upper surface of the substrate **1600.** The image sensor **1700** may be arranged below the lens module **1200.** The image sensor **1700** may be spaced apart from the groove **1610.** The image sensor **1700** may be electrically connected to the substrate **1600.** For example, the image sensor **1700** may be coupled to the substrate **1600** by a surface mounting technology (SMT). As another example, the image sensor **1700** may be coupled to the substrate **1600** by a flip chip technology.

The camera module **1010** according to the second embodiment of the present invention includes a heating member **1800.** The heating member **1800** is arranged in the lens module **1200.** The heating member **1800** is arranged on one side of the outermost lens **1220.** The heating member **1800** is arranged on the lower surface of the outermost lens **1220.** The heating member **1800** may be formed of a transparent material. The heating member **1800** may be formed in a shape that does not interfere with light passing through the lens module **1200.** For example, the heating member **1800** may be formed in a C-shape.

The heating member **1800** is electrically connected to the transmission member **1900.** The heating member **1800** receives power from the substrate **1600** through the transmission member **1900** to generate heat. The heating member **1800** may be a transparent heating film coated with indium thin oxide (ITO) having conductivity capable of generating heat by a self-resistance component. The heating member **1800** may be formed by, for example, a coating process or a deposition process of an indium tin oxide material. However, this is only an example, and the material of the heating member **1800** is not limited thereto and may be variously changed as long as it is a material that can generate heat by supplying current.

The camera module **1010** according to the second embodiment of the present invention includes a transmission member **1900.** The transmission member **1900** electrically connects the heating member **1800** and the substrate **1600.** The transmission member **1900** connects the heating member **1800** and the connector **1620.** The transmission member **1900** is electrically connected to the heating member **1800.** The transmission member **1900** is electrically connected to the substrate **1600** through the connector **1620.** The transmission member **1900** supplies current from the substrate **1600** to the heating member **1800.** The transmission member **1900** may be bent at least in part. The transmission member **1900** sequentially passes through the separation space **1110,** the hole **1134a** of the partition wall **1130,** and the groove **1620** of the substrate **1600.** The transmission member **1900** may be a flexible printed circuit board (FPCB).

The transmission member **1900** may include a first region **1910** connected to the heating member **1800,** a second region **1920** connected to the connector **1620,** and a third region **1930** connecting the first region **1910** and the second region **1920.** At least a part of the third region **1930** may be bent. The third region **1930** sequentially passes through the separation space **1110,** the hole **1134a** of the partition wall **1130,** and the groove **1620** of the substrate **1600.** Through this, space efficiency can be enhanced.

According to the camera module **1010** according to the second embodiment of the present invention, it is possible to prevent the occurrence of condensation including frost on the outermost lens **1220** through the heating member **1800.**

In addition, according to the camera module **1010** according to the second embodiment of the present invention, it is possible to prevent foreign substances from penetrating into the image sensor **1700** through the partition wall **1130,** and it is possible to enhance space efficiency.

In addition, according to the camera module **1010** according to the second embodiment of the present invention, it is possible to increase space efficiency and reduce heat loss through the spacer **1400.**

It is arranged in a way that the outermost lens **1220** is fixed by the accommodation unit **1104** without using a separate case to assemble the camera module **1010.** Through this, the assembly process of the camera module **1010** may be reduced. In addition, the cross-sectional area of the camera module **1010** can be reduced, which is effective in reducing heat loss of the camera module **1010.**

## Claims

1. A camera module comprising:
a housing (1100) comprising a body (1102) and an accommodation unit (1104) extending in an optical axis direction from a central region of the body (1102);
an outermost lens (1220) disposed on an upper part of the accommodation unit (1104);
a substrate (1600) coupled to a lower part of the housing (1100);
a connector (1620);
a heating member (1800) disposed on one side of the outermost lens (1220); and
a transmission member (1900) connecting the heating member (1800) and the connector (1620), and
wherein the housing (1100) comprises a partition wall (1130) extending from a lower surface thereof and coupled to an upper surface of the substrate (1600),
**characterized in that**
the connector (1620) is coupled to a lower surface of the substrate (1600),
the substrate (1600) comprises a first groove (1610) formed on a side surface thereof and being penetrated by the transmission member (1900),
that the partition wall (1130) comprises a hole (1134a) being penetrated through by the transmission member (1900),
that the camera module further comprises at least one lens (1210) disposed in the accommodation unit (1104) and disposed on one side of the outermost lens (1220), and
that the at least one lens (1210) is screw-coupled to an inner circumferential surface of the accommodation unit (1104).

2. The camera module according to claim 1, wherein the partition wall (1130) is overlapped with an edge region of the upper surface of the substrate (1600) in the optical axis direction.

3. The camera module according to claim 2, wherein the edge region of the upper surface of the substrate (1600) is in contact with a lower surface of the partition wall (1130), and
wherein the upper surface of the substrate (1600) is sealed from the outside by the partition wall (1130).

4. The camera module according to claim 1, wherein the transmission member (1900) comprises a first region (1910) connected to the heating member (1800), a second region (1920) connected to the connector (1620), and a third region (1930) connecting the first region (1910) and the second region (1920).

5. The camera module according to claim 4, wherein at least a portion of the third region (1930) is bent.

6. The camera module according to claim 4, wherein the third region (1930) passes through the hole (1134a) of the partition wall (1130).

7. The camera module according to claim 1, wherein the hole (1134a) is sealed by a sealing member after being penetrated by the transmission member (1900).

8. The camera module according to any one of claims 1 to 7, comprising:
the at least one lens (1210) disposed in the accommodation unit (1104); and
a spacer (1400) disposed between an inner side surface of the accommodation unit (1104) and the at least one lens (1210).

9. The camera module according to claim 8, comprising a fixing member (1500) disposed below the spacer (1400) and coupled to the inner side surface of the accommodation unit (1104).

10. The camera module according to claim 1, comprising an O-ring (1300) disposed between the outermost lens (1220) and the accommodation unit (1104).

11. The camera module according to any one of claims 1 to 10, the substrate (1600) comprises a FPCB (Flexible Printed Circuit Board).

## Patentansprüche

1. Kameramodul, umfassend:
ein Gehäuse (1100), umfassend einen Körper (1102) und eine Aufnahmeeinheit (1104), die sich in Richtung einer optischen Achse von einem zentralen Bereich des Körpers (1102) aus erstreckt;
eine äußerste Linse (1220), die auf einem oberen Teil der Aufnahmeeinheit (1104) angeordnet ist;
ein Substrat (1600), das an einen unteren Teil des Gehäuses (1100) gekoppelt ist;
einen Verbinder (1620);
ein Heizelement (1800), das auf einer Seite der äußersten Linse (1220) angeordnet ist; und
ein Übertragungselement (1900), das den Heizkörper (1800) und den Verbinder (1620) verbindet, und
wobei das Gehäuse (1100) eine Trennwand (1130) umfasst, die sich von einer unteren Oberfläche desselben erstreckt und an eine obere Oberfläche des Substrats (1600) gekoppelt ist,
**dadurch gekennzeichnet, dass**
der Verbinder (1620) an eine untere Oberfläche des Substrats (1600) gekoppelt ist,
das Substrat (1600) eine erste Nut (1610) umfasst, die an einer Seitenoberfläche desselben ausgebildet ist und von dem Übertragungselement (1900) durchdrungen wird,
die Trennwand (1130) ein Loch (1134a) umfasst, das von dem Übertragungselement (1900) durchdrungen wird,
das Kameramodul ferner mindestens eine Linse (1210) umfasst, die in der Aufnahmeeinheit (1104) angeordnet und auf einer Seite der äußersten Linse (1220) angeordnet ist, und
die mindestens eine Linse (1210) mit einer inneren umlaufenden Oberfläche der Aufnahmeeinheit (1104) schraubgekoppelt ist.

2. Kameramodul nach Anspruch 1, wobei die Trennwand (1130) mit einem Randbereich der oberen Oberfläche des Substrats (1600) in Richtung der optischen Achse überlappt.

3. Kameramodul nach Anspruch 2, wobei der Randbereich der oberen Oberfläche des Substrats (1600) in Kontakt mit einer unteren Oberfläche der Trennwand (1130) steht, und
wobei die obere Oberfläche des Substrats (1600) durch die Trennwand (1130) nach außen abgedichtet ist.

4. Kameramodul nach Anspruch 1, wobei das Übertragungselement (1900) einen mit dem Heizelement (1800) verbundenen ersten Bereich (1910), einen mit dem Verbinder (1620) verbundenen zweiten Bereich (1920) und einen den ersten Bereich (1910) und den zweiten Bereich (1920) verbindenden dritten Bereich (1930) umfasst.

5. Kameramodul nach Anspruch 4, wobei mindestens ein Abschnitt des dritten Bereichs (1930) gebogen ist.

6. Kameramodul nach Anspruch 4, wobei der dritte Bereich (1930) durch das Loch (1134a) der Trennwand (1130) verläuft.

7. Kameramodul nach Anspruch 1, wobei das Loch (1134a) durch ein Dichtungselement abgedichtet ist, nachdem es von dem Übertragungselement (1900) durchdrungen wurde.

8. Kameramodul nach einem der Ansprüche 1 bis 7, umfassend:
die mindestens eine in der Aufnahmeeinheit (1104) angeordnete Linse (1210); und
einen Abstandshalter (1400), der zwischen einer inneren Seitenoberfläche der Aufnahmeeinheit (1104) und der mindestens einen Linse (1210) angeordnet ist.

9. Kameramodul nach Anspruch 8, umfassend ein Befestigungselement (1500), das unter dem Abstandshalter (1400) angeordnet und an die innere Seitenoberfläche der Aufnahmeeinheit (1104) gekoppelt ist.

10. Kameramodul nach Anspruch 1, umfassend einen O-Ring (1300), der zwischen der äußersten Linse (1220) und der Aufnahmeeinheit (1104) angeordnet ist.

11. Kameramodul nach einem der Ansprüche 1 bis 10, das Substrat (1600) umfasst eine FPCB (flexible Leiterplatte).

## Revendications

1. Module caméra comprenant :
un boîtier (1100) comprenant un corps (1102) et une unité de logement (1104) s'étendant dans la direction de l'axe optique depuis une région centrale du corps (1102) ;
une lentille la plus externe (1220) disposée sur une partie supérieure de l'unité de logement (1104) ;
un substrat (1600) couplé à une partie inférieure du boîtier (1100) ;
un connecteur (1620) ;
un élément chauffant (1800) disposé sur un côté de la lentille la plus externe (1220) ; et
un élément de transmission (1900) reliant l'élément chauffant (1800) et le connecteur (1620), et
dans lequel le boîtier (ll00) comprend une cloison (1130) s'étendant depuis sa surface inférieure et couplée à une surface supérieure du substrat (1600),
**caractérisé en ce que**
le connecteur (1620) est couplé à une surface inférieure du substrat (1600),
le substrat (1600) comprend une première rainure (1610) formée sur une surface latérale de celui-ci et traversée par l'élément de transmission (1900),
que la cloison (1130) comprend un trou (1134a) traversé par l'élément de transmission (1900),
que le module caméra comprend en outre au moins une lentille (1210) disposée dans l'unité de logement (1104) et disposée d'un côté de la lentille la plus externe (1220), et
qu'au moins une lentille (1210) est couplée par vissage à une surface circonférentielle intérieure de l'unité de logement (1104).

2. Module caméra selon la revendication 1, dans lequel la cloison (1130) se superpose à une région de bord de la surface supérieure du substrat (1600) suivant la direction de l'axe optique.

3. Module caméra selon la revendication 2, dans lequel la région de bord de la surface supérieure du substrat (1600) est en contact avec une surface inférieure de la cloison (1130), et
dans lequel la surface supérieure du substrat (1600) est rendue étanche vis-à-vis de l'extérieur par la cloison (1130).

4. Module caméra selon la revendication 1, dans lequel l'élément de transmission (1900) comprend une première région (1910) reliée à l'élément chauffant (1800), une deuxième région (1920) reliée au connecteur (1620), et une troisième région (1930) reliant la première région (1910) et la deuxième région (1920).

5. Module caméra selon la revendication 4, dans lequel au moins une partie de la troisième région (1930) est courbée.

6. Module caméra selon la revendication 4, dans lequel la troisième région (1930) traverse le trou (1134a) de la cloison (1130).

7. Module caméra selon la revendication 1, dans lequel le trou (1134a) est obturé par un élément d'étanchéité après le passage de l'élément de transmission (1900).

8. Module de caméra selon l'une quelconque des revendications 1 à 7, comprenant :
au moins une lentille (1210) disposée dans l'unité de logement (1104) ; et
une entretoise (1400) disposée entre une surface latérale intérieure de l'unité de logement (1104) et au moins une lentille (1210).

9. Le module caméra selon la revendication 8, comprenant un élément de fixation (1500) disposé sous l'entretoise (1400) et couplé à la surface latérale intérieure de l'unité de logement (1104).

10. Le module caméra selon la revendication 1, comprenant un joint torique (1300) disposé entre la lentille la plus externe (1220) et l'unité de logement (1104).

11. Module caméra selon l'une quelconque des revendications 1 à 10, dans lequel le substrat (1600) comprend un FPCB (circuit imprimé flexible).
